# EUROPEAN PATENT APPLICATION

(11) **EP 1 387 278 A2**
(43) Date of publication of application: **04.02.2004**
(21) Application number: 03291915.1
(22) Date of filing: 30.07.2003
(51) Int. Cl.: G06F 12/08

(54) **Methods and apparatuses for managing memory**

(30) Priority: 31.07.2002 US 400391 P
(71) Applicant: Texas Instruments Inc., Dallas, Texas 75251 (US); Texas Instruments France, 06271 Villeneuve Loubet Cedex, Nice (FR)
(72) Inventor: Lasserre, Serge, 83600 Frejus (FR); D'inverno, Dominique, 06270 Villeneuve-Loubet (FR); Chauvel, Gerard, 06600 Antibes (FR)
(74) Representative: Holt, Michael

(57) **Abstract**

Methods and apparatuses are disclosed for managing a memory. In some embodiments, the methods may include issuing a data request to remove data from memory, determining whether the data is being removed from a cache line in a cache memory, determining whether the data being removed is stack data, and varying the memory management policies if stack data is being removed that corresponds to a predetermined word in the cache line. If the predetermined word in the cache line is the first word, then the cache line may be invalidated regardless of its dirty state and queued for replacement. In this manner, invalidated cache lines may be replaced by incoming data instead of transferring them to the main memory unnecessarily and removing other more valuable data from the cache. Thus, number of memory accesses may be reduced and overall power consumption may be reduced.

## Description

The present invention relates generally to processor based systems and more particularly to memory management techniques for the processor based system.

Many types of electronic devices are battery operated and thus preferably consume as little power as possible. An example is a cellular telephone. Further, it may be desirable to implement various types of multimedia functionality in an electronic device such as a cell phone. Examples of multimedia functionality may include, without limitation, games, audio decoders, digital cameras, etc. It is thus desirable to implement such functionality in an electronic device in a way that, all else being equal, is fast, consumes as little power as possible and requires as little memory as possible. Improvements in this area are desirable.

### BRIEF SUMMARY OF THE INVENTION

Methods and apparatuses are disclosed for managing a memory. In some embodiments, the methods may include issuing a data request to remove data from memory, determining whether the data is being removed from a cache line in a cache memory, determining whether the data being removed is stack data, and varying the memory management policies if stack data is being removed that corresponds to a predetermined word in the cache line. Consequently, if the predetermined word in the cache line is the first word, then the cache line may be invalidated regardless of its dirty state and queued for replacement. In this manner, invalidated cache lines may be replaced by incoming data instead of transferring them to the main memory unnecessarily and removing other more valuable data from the cache. Thus, number of memory accesses may be reduced and overall power consumption may be reduced.

### NOTATION AND NOMENCLATURE

Certain terms are used throughout the following description and claims to refer to particular system components. As one skilled in the art will appreciate, semiconductor companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection, or through an indirect connection via other devices and connections. The term "allocate" is intended to mean loading data, such that memories may allocate data from other sources such as other memories or storage media.

### BRIEF DESCRIPTION OF THE DRAWINGS

For a more detailed description of the preferred embodiments of the present invention, reference will now be made to the accompanying drawings, wherein:
Figure 1 illustrates a processor based system according to the preferred embodiments;
Figure 2 illustrates an exemplary controller;
Figure 3 illustrates an exemplary memory management policy; and
Figure 4 illustrates an exemplary embodiment of the system described herein.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein is directed to a processor based system comprising multiple levels of memory. The processor based system described herein may be used in a wide variety of electronic systems. One example comprises using the processor based system in a portable, battery-operated cell phone. As the processor executes various system operations, data may be transferred between the processor and the multiple levels of memory, where the time associated with accessing each level of memory may vary depending on the type of memory used. The processor based system may implement one or more features that reduce the number of transfers among the multiple levels of memory and improve the cache generic replacement policy. Consequently, the amount of time taken to transfer data between the multiple levels of memory may be eliminated and the overall power consumed by the processor based system may be reduced.

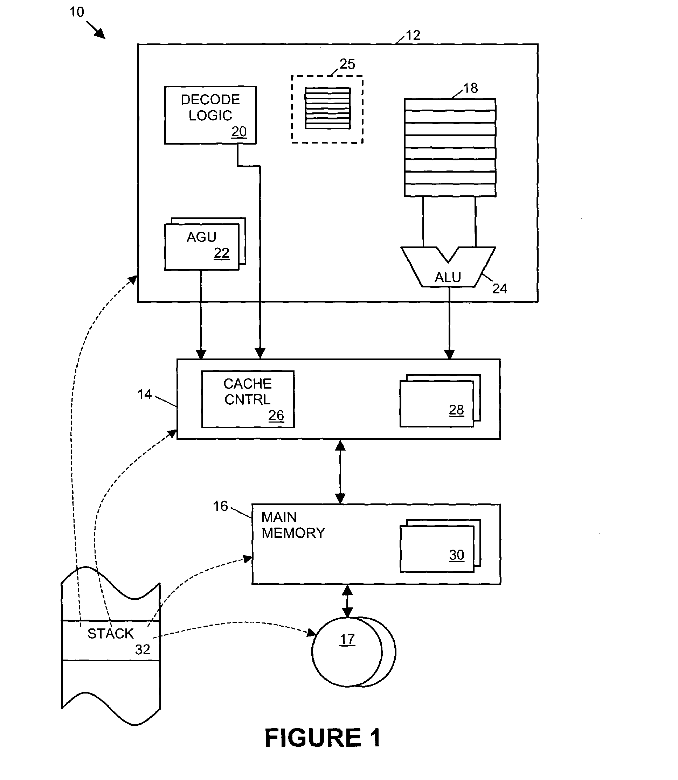

Figure 1 illustrates a system 10 comprising a processor 12 coupled to a first level or cache memory 14, a second level or main memory 16, and a disk array 17. The processor 12 comprises a register set 18, decode logic 20, an address generation unit (AGU) 22, an arithmetic logic unit (ALU) 24, and an optional micro-stack 25. Cache memory 14 comprises a cache controller 26 and an associated data storage space 28.

Main memory 16 comprises a storage space 30, which may contain contiguous amounts of stored data. For example, if the processor 12 is a stack-based processor, main memory 16 may include a stack 32. In addition, cache memory 14, disk array 17, and micro-stack 25 also may contain portions of the stack 32 (as indicated by the dashed arrows). Stack 32 preferably contains data from the processor 12 in a last-in-first-out manner (LIFO). Register set 18 may include multiple registers such as general purpose registers, a program counter, and a stack pointer. The stack pointer preferably indicates the top of the stack 32. Data may be produced by system 10 and added to the stack by "pushing" data at the address indicated by the stack pointer. Likewise, data may be retrieved and consumed from the stack by "popping" data from the address indicated by the stack pointer. Also, as will be described below, selected data from cache memory 14 and main memory 16 may exist in the micro-stack 25. The access times and cost associated with each memory level illustrated in Figure 1 may be adapted to achieve optimal system performance. For example, the cache memory 14 may be part of the same integrated circuit as the processor 12 and main memory 16 may be external to the processor 12. In this manner, the cache memory 14 may have relatively quick access time compared to main memory 16, however, the cost (on a per-bit basis) of cache memory 14 may be greater than the cost of main memory 16. Thus, internal caches, such as cache memory 14, are generally small compared to external memories, such as main memory 16, so that only a small part of the main memory 16 resides in cache memory 14 at a given time. Therefore, reducing data transfers between the cache memory 14 and the main memory 16 may be a key factor in reducing latency and power consumption of a system.

As the software executes on system 10, processor 12 representative of JSM "Java Stack machine", a stack based processor, in which most instructions operate on a stack may issue effective addresses along with read or write data requests, and these requests may be satisfied by various system components (e.g., cache memory 14, main memory 16, micro-stack 25, or disk array 17) according to a memory mapping function. Although various system components may satisfy read/write requests, the software may be unaware whether the request is satisfied via cache memory 14, main memory 16, micro-stack 25, or disk array 17. Preferably, traffic to and from the processor 12 is in the form of words, where the size of the word may vary depending on the architecture of the system 10. Rather than a single word from main memory 16, each entry in cache memory 14 preferably contains multiple words referred to as a "cache line". The principle of locality states, that within a given period of time, programs tend to reference a relatively confined area of memory repeatedly. As a result, caching data in a small memory (e.g., cache memory 14), with faster access than the main memory 16 may capitalize on the principle of locality. The efficiency of the multi-level memory may be improved by infrequently writing cache lines from the slower memory (main memory 16) to the quicker memory (cache memory 14), and accessing the cache lines in cache memory 14 as much as possible before replacing a cache line.

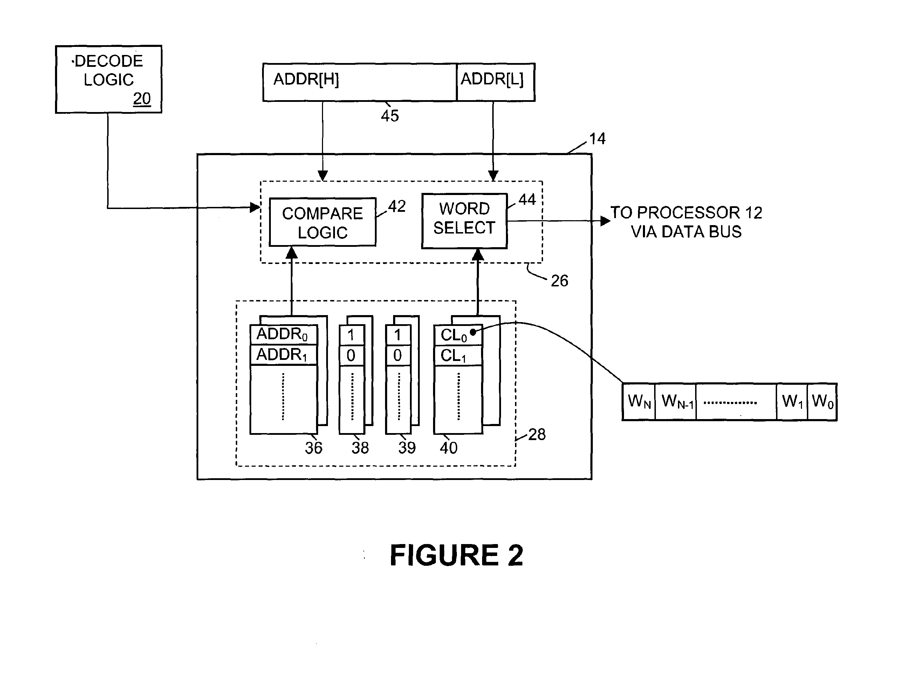

Controller 26 may implement various memory management policies. Figure 2 illustrates an exemplary implementation of cache memory 14 including the controller 26 and the storage space 28. Although some of the Figures may illustrate controller 26 as part of cache memory 14, the location of controller 26, as well as its functional blocks, may be located anywhere within the system 10. Storage space 28 includes a tag memory 36, valid bits 38, dirty bits 39, and multiple data arrays 40. Data arrays 40 contain cache lines, such as CL₀ and CL₁, where each cache line includes multiple data words as shown. Tag memory 36 preferably contains the addresses of data stored in the data arrays 40, e.g., ADDR₀ and ADDR₁ correspond to cache lines CL₀ and CL₁ respectively. Valid bits 38 indicate whether the data stored in the data arrays 40 are valid. For example, cache line CL₀ may be enabled and valid, whereas cache line CL₁ may be disabled and invalid. New data that is to be written to data arrays 40 preferably replaces invalid cache lines. Replacement algorithms may include, random replacement, round robin replacement, and least recently used (LRU) replacement. Dirty bits 39 indicate whether the data stored in data arrays 40 is coherent with other versions of the same data in other storage locations, such as main memory 16. For example, the dirty bit associated with cache line CL₀ may be enabled indicating that the data in CL₀ is not coherent with the version of that data that is located in main memory 16.

Controller 26 includes compare logic 42 and word select logic 44. The controller 26 may receive an address request 45 from the AGU 22 via an address bus, and data may be transferred between the controller 26 and the ALU 24 via a data bus. The size of address request 45 may vary depending on the architecture of the system 10. Address request 45 may include an upper portion ADDR[H] that indicates which cache line the desired data is located in, and a lower portion ADDR[L] that indicates the desired word within the cache line. Compare logic 42 may compare a first part of ADDR[H] to the contents of tag memory 36, where the contents of the tag memory 36 that are compared are the cache lines indicated by a second part of ADDR[H]. If the requested data address is located in this tag memory 36 and the valid bit 38 associated with the requested data address is enabled, then compare logic 42 generates a "cache hit" and the cache line may be provided to the word select logic 44. Word select logic 44 may determine the desired word from within the cache line based on the lower portion of the data address ADDR[L], and the requested data word may be provided to the processor 12 via the data bus. Otherwise, compare logic 42 generates a cache miss causing an access to the main memory 16. Decode logic 20 may generate the address of the data request and may provide the controller 26 with additional information about the address request. For example, the decode logic 20 may indicate the type of data access, i.e., whether the requested data address belongs on the stack 32 (illustrated in Figure 1). Using this information, the controller 26 may implement cache management policies that are optimized for stack based operations as described below.

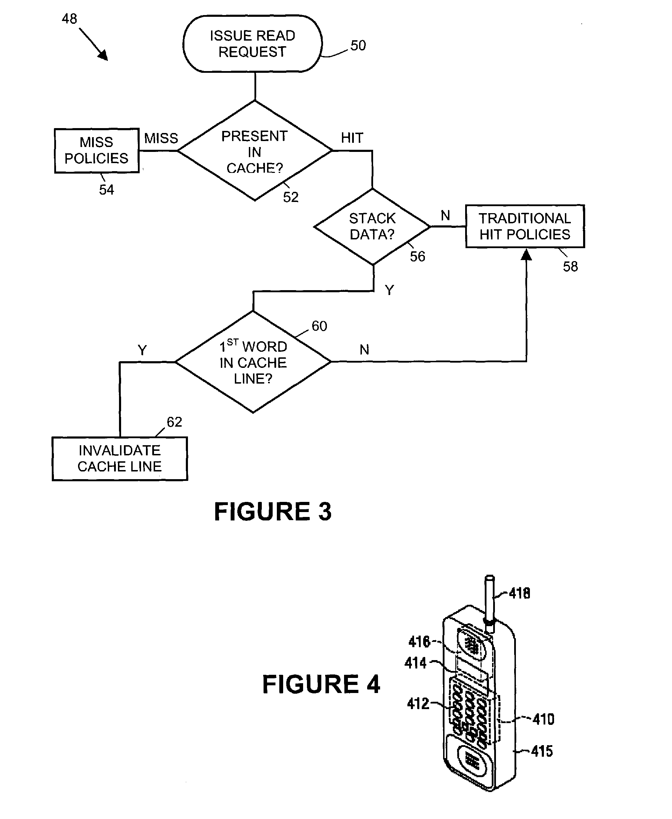

Figure 3 illustrates an exemplary cache management policy 48 that may be implemented by the controller 26. Per block 50, a read request may be issued to controller 26. Controller 26 then may determine whether the data is present in cache memory 14, as indicated by block 52. The controller 26 may determine that the data to be read is not present in the cache memory 14 and a "cache miss" may be generated. In the event of a cache miss, miss policies may be implemented per block 54. For example, miss policies discussed in copending application entitled "Methods and Apparatuses for Managing Memory," filed , serial no. (Atty. Docket No.: TI-35430), may be implemented in block 54. Alternatively, the controller 26 may determine that the requested address is present in the cache memory 14 and a "cache hit" may be generated.

Controller 26 may then determine whether the initial read request (block 50) refers to data that is part of the stack 32, sometimes called "stack data", as indicated by block 56. Decode logic 20, illustrated in Figure 2, may provide the controller 26 with information indicating whether the initial request for data was for stack data. In the event that the initial read request does not refer to stack data, then traditional read hit policies may be implemented as indicated by block 58. If the initial read request does refer to stack data, a determination is made as to whether the read hit corresponds to the first word in the cache line, per block 60.

For the sake of the current discussion, it will be assumed that when the system 10 is reading stack data, the corresponding address in memory decreases as the stack is contracting (e.g. system 10 is popping a value on from the stack). Thus, as stack data is read from a cache line within cache memory 14 (e.g., system 10 popping values from the stack 32), subsequently read data are read from subsequent words of the cache line in an ascending manner. For example, in popping stack data from cache line CL₀ (illustrated in Figure 2), word W_{N} would be read before word W_{N-1·} Due to the sequential nature of the stack 32 and the fact that data is popped from the cache line in an ascending manner, the data contained in the rest of the cache line may be invalid. For example, if word W_{N-1} is being popped from cache line CL₀, then the value in word W_{N} may be invalid because it has already been popped. Thus, once the first word W₀ in the cache line CL₀ is reached, the values in the rest of the words (i.e., W₁-W_{N}) will be invalid.

In the event that the read request does not refer to the first word in the cache line, then traditional hit policies may be implemented, as indicated in block 58. Alternatively, if the read request does refer to the first word in the cache line, then the cache line may be invalidated per block 62. Invalidating the cache line allows replacement algorithms to replace this newly invalidated cache line the next time space is needed in the cache memory 14. For instance, in a 2 way set associative cache with a LRU replacement policy, a missing line can only be loaded in two different locations within the cache. The victim location is selected by preferably one LRU bit per cache line, which specified which of the two possible lines must be replaced. If both lines are valid, the LRU indicates which line must be replaced by selecting the Least Recently Used. If one of the line is invalid, the LRU hardware selects to the invalid line by default. Therefore, by invalidating a line, the LRU bit of the corresponding line is simultaneously changed it to point to this invalidated line, when its last word is read, instead of pointing to the other line that might hold more useful data. Invalid data may be removed selectively from the cache when good data may be preserved, reducing potential unnecessary cache eviction and reload. In addition, invalidated lines are restricted from being written back to main memory 16 and therefore traffic between the cache memory 14 and the main memory 16 may be reduced by invalidating cache lines.

Although the embodiments refer to situations where the stack 32 is increasing, i.e., the stack pointer incrementing as data are pushed onto the stack, the above discussion equally applies to situations where the stack 32 is decreasing, i.e., stack pointer decrementing as data are pushed onto the stack. Also, instead of checking of the first word of the cache line to adapt the cache replacement policy, checking of the last words of the cache line may be done. For example, if the stack pointer is referring to word W₀ of a cache line CL₀, and a cache hit occurs from a read operation (e.g., as the result of popping multiple values from the stack 32), then subsequent words, i.e., W₁, W₂, ..., W_{N} may also generate cache hits. If when reading the last words of a line W_{N,} the cache hits, the cache line is invalidated. If it does not hit, the cache line is not loaded as described in copending application entitled "Methods and Apparatuses for Managing Memory," filed , serial no. (Atty. Docket No.: TI-35430) .

In addition, although some embodiments refer to situations where the cache replacement policy is modified while invalidating cache lines, other embodiments include modifying the cache replacement policy without invalidating a cache line. For example, the LRU policy may point to the cache line without invalidating the cache line. In this manner, the cache line may be written back to main memory 14 and valid data in the cache line may be retained. This may be accomplished by implementing the replacement policy in hardware.

As was described above, stack based operations, such as pushing and popping data, may result in cache access. The micro-stack 25 may initiate the data stack transfer between system 10 and the cache memory 14. For example, in the event of an overflow or underflow operation, as is described in copending application entitled "A Processor with a Split Stack," filed , serial no. (Atty. Docket No.: TI-35425), the micro-stack 25 may push and pop data from the stack 32. Stack operations also may be originated by a stack-management OS, which also may benefit from the disclosed cache management policies by indicating prior to the data access that data belong to a stack and thus optimizing those accesses. Furthermore, some programming languages, such as Java, implement stack based operations and may benefit from the disclosed embodiments.

As noted previously, system 10 may be implemented as a mobile cell phone such as that illustrated in Figure 4. As shown, a mobile communication device includes an integrated keypad 412 and display 414. The processor 12 and other components may be included in electronics package 410 connected to the keypad 412, display 414, and radio frequency ("RF") circuitry 416. The RF circuitry 416 may be connected to an antenna 418.

While the preferred embodiments of the present invention have been shown and described, modifications thereof can be made by one skilled in the art without departing from the spirit and teachings of the invention. The embodiments described herein are exemplary only, and are not intended to be limiting. Many variations and modifications of the invention disclosed herein are possible and are within the scope of the invention. For example, the various portions of the processor based system may exist on a single integrated circuit or as multiple integrated circuits. Also, the various memories disclosed may include other types of storage media such as disk array 17, which may comprise multiple hard drives. Accordingly, the scope of protection is not limited by the description set out above. Each and every claim is incorporated into the specification as an embodiment of the present invention.

## Claims

1. A method of managing memory, comprising:
issuing a data request to remove data;
determining whether the data is being removed from a cache line in a cache memory;
determining whether the data being removed is stack data; and
varying the memory management policies depending on whether the data being removed corresponds to a predetermined word in the cache line.

2. The method of claim 1, wherein the predetermined word is the first word in the cache line.

3. The method of claim 2, wherein the cache line holding the stack data is queued for replacement by a replacement policy when a read hit occurs on the first word of the cache line.

4. The method of claim 3, wherein the replacement policy is a least recently used (LRU) policy.

5. The method of any preceding claim, wherein the cache line is a dirty cache line.

6. A system, comprising:
a memory;
a controller coupled to the memory;
a stack that exists in the memory;
wherein the memory further comprises a cache memory and a main memory; and
wherein the controller adjusts its management policies depending on whether data that is being removed corresponds to a predetermined word in a cache line.

7. The system of claim 6, wherein the cache line is invalidated.

8. The system of claim 7, wherein the invalidated cache line is queued for replacement by a replacement policy.

9. The system of any claim 6-8, wherein the predetermined word is the last word in the cache line.

10. The system of claim 6, the cache line is a dirty cache line.

11. The system of claim 10, wherein the dirty cache line is invalidated if the predetermined word in the dirty cache line is the first word.
